# FASCICULE DE BREVET EUROPEEN

(11) **EP 0 940 620 B1**
(45) Date de publication et mention de la délivrance du brevet: **14.05.2003**
(21) Numéro de dépôt: 99420047.5
(22) Date de dépôt: 23.02.1999
(51) Int. Cl.: F16L 33/207

(54) **Raccord à sertir pour un tuyau en matière synthétique**
Pressfitting für Kunststoffrohre
Compression fitting for plastic pipes

(30) Priorité: 02.03.1998 FR 9802731
(43) Date de publication de la demande: 08.09.1999
(73) Titulaire: Comap Abbeville S.A., 80100 Abbeville (FR)
(72) Inventeur: Bruvry, Michel, 80132 Hautvillers (FR)
(74) Mandataire: Maureau, Philippe

(56) Documents cités:
- EP-A- 0 713 042
- DE-A- 3 003 368
- DE-U- 9 110 998

## Description

La présente invention concerne un raccord à sertir pour un tuyau en matière synthétique, éventuellement composite.

Un tel raccord comporte de manière connue une pièce de raccordement en métal, l'extrémité du tuyau en matière synthétique pouvant être sertie à l'aide d'une douille de sertissage sur une section sensiblement cylindrique de la pièce de raccordement dans la zone de liaison.

Pour réaliser le raccordement entre la pièce de raccordement en métal et l'extrémité du tuyau, la douille de sertissage est placée au niveau de la section sensiblement cylindrique de la pièce de raccordement et l'extrémité du tuyau vient se glisser entre la pièce de raccordement et la douille de sertissage. Le sertissage est alors réalisé à l'aide d'une pince de sertissage munie de mors de sertissage qui viennent exercer périphériquement une pression sur la douille de sertissage en déformant plastiquement cette dernière, de manière à pincer l'extrémité du tuyau en matière synthétique entre la pièce de raccordement et la douille ainsi déformée.

Dans ce type de raccord, il arrive que la douille de sertissage glisse sur l'extrémité du tuyau, ou bien encore que l'extrémité du tuyau se déplace par rapport à la pièce de raccordement. Ceci arrive d'autant plus facilement que le raccord est réalisé en un endroit peu accessible et que la pince de sertissage est relativement encombrante et lourde à manipuler. De plus, lors du sertissage, la pince cache le raccord à la vue du manipulateur qui ne peut donc pas voir si les divers éléments du raccord se déplacent.

Le document EP-0 713 042 propose une solution pour remédier à ces problèmes et permettre un contrôle actif pour savoir avant, pendant et après le sertissage si les positions de l'extrémité du tuyau et de la douille de sertissage sont correctes. Dans le raccord proposé, la pièce de raccordement comporte une collerette qui présente sur sa surface extérieure un évidement, une zone transparente ou similaire du côté destiné à recevoir le tuyau.

Le document DE-U-91 10 998.1 propose aussi une solution à ce problème et suggère par exemple de ménager une fente annulaire entre la face frontale intérieure de la douille de sertissage et la collerette, ou bien de munir la douille de sertissage d'une lumière permettant de visualiser ainsi l'extrémité du tuyau.

D'autres raccords connus permettent également une visualisation de l'extrémité du tuyau par rapport à la douille de sertissage.

L'inconvénient de ces raccords et de ces moyens de visualisation est que l'on ne peut pas toujours bien visualiser la bonne position du tuyau et de la douille. En effet, si le tuyau est de couleur sombre et qu'il se trouve dans un endroit peu éclairé, il est difficile de le distinguer par la fente ou similaire prévue pour le laisser apparaître. Ce cas de figure est assez fréquent car les raccords sont souvent réalisés au sein d'un équipement et en des endroits plus ou moins accessibles.

La présente invention a alors pour but de fournir un raccord à sertir pour un tuyau en matière synthétique, éventuellement en matériau composite, muni d'un dispositif de visualisation permettant de savoir, même dans de mauvaises conditions d'éclairage, si l'extrémité du tuyau est bien introduite dans le raccord.

À cet effet, le raccord à sertir pour un tuyau en matière synthétique qu'elle propose est du type comportant une pièce de raccordement rigide présentant une zone de raccordement sensiblement cylindrique, et une douille de sertissage destinée à être déformée au niveau de la zone de raccordement en fixant l'extrémité du tuyau sur la pièce de raccordement.

Selon l'invention, ce raccord comporte en outre un indicateur munie d'au moins un index, placé essentiellement dans la douille de sertissage au niveau de la zone de raccordement, et déplaçable radialement entre une position de repos dans laquelle l'indicateur est précontraint par des moyens élastiques et une position active dans laquelle l'indicateur est maintenu par action du tuyau à raccorder à l'encontre des moyens élastiques, une lumière réalisée dans la douille de sertissage étant prévue pour le passage de chaque index lorsque l'indicateur passe de sa position de repos à sa position active ou inversement.

Le fonctionnement de ce raccord et de son dispositif garantissant un bon positionnement est le suivant. Lorsqu'une extrémité de tuyau est suffisamment emmanché sur la zone de raccordement, il vient agir sur l'indicateur à l'encontre de la force de précontrainte élastique le maintenant dans sa position pour l'amener dans sa position active. Ceci provoque un déplacement de l'index visible par l'opérateur.

L'avantage de ce dispositif par rapport aux dispositifs connus de l'art antérieur, est que l'indication donnée n'est pas seulement visuelle mais peut aussi être tactile. Lorsque le raccord est dans un endroit mal éclairé et/ou est caché, il est possible d'avoir une indication par simple toucher afin de déterminer la position de l'index.

Dans une première forme de réalisation, l'indicateur est une bague présentant à sa périphérie un index s'étendant radialement, l'évidement intérieur de la bague étant excentré par rapport à la zone de raccordement dans la position de repos de l'indicateur. Dans ce cas, lorsque l'extrémité du tuyau agit sur la douille, il vient recentré l'évidement intérieur de la bague par rapport à l'ensemble du raccord.

Selon une autre forme de réalisation, l'indicateur se présente sous la forme d'un arc de cercle muni d'un index s'étendant radialement, l'arc de cercle étant excentré par rapport à la zone de raccordement. Ici aussi, l'extrémité du tuyau agit pour recentrer l'indicateur par rapport au raccord.

Les moyens élastiques sont avantageusement intégrés à l'indicateur. Ces moyens élastiques sont alors par exemple des pattes élastiques destinées à prendre appui sur la paroi interne de la douille de sertissage.

Les moyens élastiques agissent par exemple sur l'indicateur de manière à ce que l'index soit en position rétractée à l'intérieur de la douille dans la position de repos de l'indicateur. Dans ce cas, un bon raccordement est signalé par un index faisant saillie hors de la douille.

Une variante prévoit que les moyens élastiques agissent sur l'indicateur de manière à ce que l'index fasse saillie hors de la lumière réalisée dans la douille de sertissage dans la position de repos de l'indicateur. Dans ce cas, un bon raccordement est signalé par la position rétractée de l'index à l'intérieur de la douille.

Dans une forme de réalisation préférentielle, la pièce de raccordement comporte avantageusement une collerette destinée à servir de butée pour l'extrémité du tuyau lorsque ce dernier est bien emmanché sur la zone de raccordement, et la douille de sertissage est reliée à la collerette.

Dans une forme de réalisation préférentielle, la douille de sertissage est encliquetée sur la collerette. On peut également prévoir que la douille de sertissage est encliquetée sur une pièce en matière synthétique, elle-même fixée, par exemple par encliquetage, sur la collerette.

Dans ce dernier cas, la pièce intermédiaire en matière synthétique se prolonge avantageusement au niveau d'un épaulement formé par la zone de raccordement et la collerette et sert ainsi de butée à l'extrémité du tuyau. Cette forme de réalisation est avantageuse pour un tuyau composite, par exemple un tuyau multicouches avec une âme en aluminium.

Pour une meilleure lisibilité de l'information donnée par l'indicateur quant à la qualité du raccordement réalisé, l'indicateur peut comporter deux index et la douille de sertissage est alors munie de deux lumières correspondantes.

Une variante de réalisation d'un indicateur à deux index prévoit que les deux index sont diamétralement opposés par rapport à la zone de raccordement et sont reliés par des branches de manière à former un évidement ovale déformable élastiquement, la largeur de l'ovale étant inférieure au diamètre extérieur du tuyau à raccorder tandis que la longueur de l'ovale est supérieure au diamètre extérieur du tuyau à raccorder.

Lorsque le raccord est plus particulièrement destiné à des tuyaux composites, comportant par exemple plusieurs couches en matière synthétique et une âme en aluminium, l'indicateur est avantageusement accouplé à une bague réalisée en matériau diélectrique dont le profil correspond sensiblement à la section du tuyau à raccorder.

Le raccord selon l'invention est particulièrement bien adapté pour des machines de sertissage automatiques, car la présence ou l'absence d'un index est relativement facile à détecter à l'aide d'un capteur, alors que les raccords de l'art antérieur ne permettent pas de facilement vérifier, à l'aide de capteur, le bon ou mauvais emmanchement du tuyau à raccorder sur la pièce de raccordement.

Pour faciliter un bon positionnement du raccord à sertir dans une machine de sertissage automatique, l'invention suggère de munir la pièce de raccordement d'une gorge annulaire. Cette dernière peut se trouver par exemple à côté d'une collerette telle que décrite ci-dessus. L'invention suggère également, en complément ou en remplacement de la gorge annulaire, de prévoir sur la douille de sertissage un épaulement extérieur. Bien entendu, cette gorge et cet épaulement ne sont pas essentiels pour l'invention.

L'invention propose aussi un outil de sertissage destiné au sertissage d'un raccord à sertir tel que décrit précédemment et comportant des mâchoires de sertissage. Selon l'invention, des moyens permettant de détecter la présence ou l'absence de l'index au nombre d'au moins un sont prévus dans cet outil. Avantageusement, les moyens de détection comportent un contacteur électrique. Une détection optique ou magnétique, en équipant alors l'index d'une pièce en matériau magnétique, peuvent aussi être envisagées.

De toute façon, l'invention sera bien comprise à l'aide de la description qui suit, en référence au dessin schématique annexé représentant à titre d'exemples non limitatifs plusieurs formes de réalisation d'un raccord à sertir selon l'invention.
Figure 1 est une vue en coupe longitudinale d'un raccord selon l'invention pour un tuyau à raccorder en matière synthétique composite,
Figure 2 est une vue en coupe longitudinale du raccord de la figure précédente avec un tuyau à raccorder en matière synthétique,
Figure 3 est une vue en coupe selon la ligne de coupe III-III de la figure 2,
Figure 4 est une vue correspondant à la figure 3, le tuyau à raccorder étant retiré,
Figure 5 est une vue de face d'une variante d'un indicateur utilisé dans un raccord selon l'invention,
Figure 6 est une vue en coupe longitudinale correspondant aux vues des figures 1 et 2 pour une variante de réalisation d'un raccord selon l'invention,
Figure 7 et 8 sont des vues correspondant aux vues respectivement des figures 3 et 4 mais selon la ligne de coupe VII-VII de la figure 6,
Figure 9 est une vue en coupe longitudinale d'une autre variante de réalisation de raccord à sertir selon l'invention,
Figure 10 est une vue en coupe longitudinale de l'indicateur utilisé dans le raccord de la figure 9,
Figures 11 et 12 sont des vues en coupe selon la ligne de coupe XI-XI de la figure 9 et correspondent aux figures 3 et 4 respectivement,
Figure 13 est une vue en coupe correspondant à la figure 10, d'une variante de réalisation de l'indicateur représenté,
Figure 14 est une vue en coupe longitudinale correspondant à la vue en coupe de la figure 1 pour une dernière variante de réalisation d'un raccord selon l'invention, et
Figures 15 et 16 sont des vues en coupe selon la ligne de coupe XV-XV de la figure 14 correspondant respectivement aux vues en coupe des figures 3 et 4.

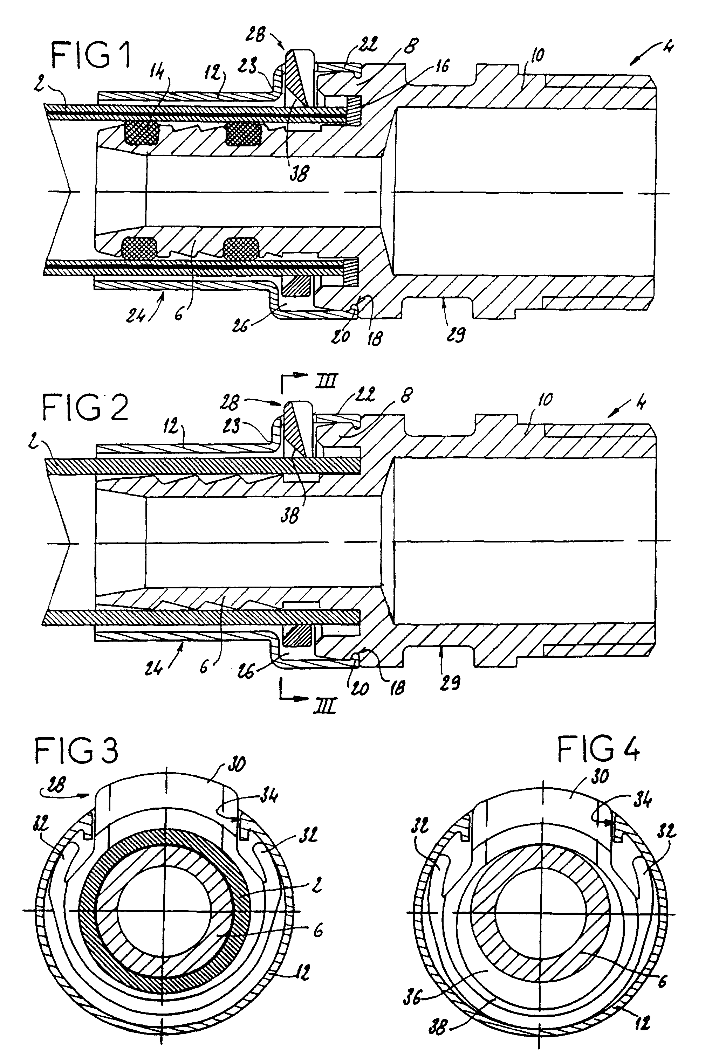

Figure 1 représente en coupe longitudinale un raccord à sertir pour un tuyau 2 en matière synthétique composite. Ce tuyau 2 comporte des couches intérieure et extérieure en matière synthétique enveloppant une âme centrale réalisée en aluminium. Le problème technique posé ici est de raccorder une extrémité libre du tuyau 2 multicouches avec âme en aluminium à une pièce de raccordement 4. Cette dernière comporte une zone de raccordement 6, appelée aussi canule 6, une collerette 8 ainsi qu'un corps 10. La surface extérieure de la canule présente des surfaces inclinées et la coupe en section longitudinale (figure 2) de la surface extérieure présente une forme rappelant des dents de requin ou bien encore un sapin. Cette forme de la surface extérieure est connu de l'homme du métier et permet d'avoir un bon accrochage du tuyau 2 sur la canule 6.

Une douille de sertissage 12 entoure l'extrémité du tuyau 2 au niveau de la canule 6.

Pour parfaire l'étanchéité, des joints 14 sont prévus entre la surface extérieure de la canule 6 et le tuyau 2 multicouches avec âme en matière synthétique. Pour éviter une liaison électrique entre l'âme du tuyau 2 et la pièce de raccordement 4, un anneau 16 en matériau diélectrique est prévu au niveau de la face frontale de l'extrémité libre du tuyau 2.

Les figures du dessin, notamment les figures montrant un raccord selon l'invention en coupe longitudinale, représentent ce raccord avant le sertissage de la douille de sertissage sur l'extrémité du tuyau.

La douille de sertissage 12 est maintenue sur la pièce de raccordement 4 par encliquetage. À cet effet, une rainure périphérique 18 est réalisée sur la collerette tandis que la douille de sertissage présente une nervure 20 s'étendant radialement vers l'intérieur. Cette douille présente deux zones de diamètres différents. Une première zone d'accrochage 22 d'un diamètre sensiblement égal au diamètre de la collerette 8 et une zone de sertissage 24 d'un diamètre légèrement supérieur au diamètre extérieur du tuyau à raccorder. La nervure radiale 20 de la douille 12 se trouve à l'extrémité libre de sa zone d'accrochage 22.

La zone d'accrochage 22 recouvre partiellement la collerette 8 et présente également un espace libre 26 voisin de la collerette 8 du côté de la canule 6. Cet espace libre est destiné à recevoir un indicateur 28 destiné à visualiser si l'extrémité du tuyau 2 est suffisamment emmanché sur la canule 6 pour réaliser un bon raccordement.

Un épaulement 23 est réalisé au niveau de la jonction des zones d'accrochage 22 et de sertissage 24. Cet épaulement 23 peut être mis à profit pour permettre un bon positionnement du raccord à sertir dans des mâchoires d'une machine à sertir, par exemple une machine à sertir automatique.

La pièce de raccordement 4 comporte, à côté de la collerette 8, une gorge annulaire 29 qui, de même que l'épaulement 23, peut être utilisée pour le bon positionnement du raccord à sertir dans des mâchoires d'un outil de sertissage.

La figure 3 montre l'indicateur 28 en vue de face. Ce dernier présente la forme d'une bague circulaire munie à sa périphérie d'un index 30 et de deux pattes élastiques 32. L'index 30 est déplaçable radialement à travers une lumière 34 réalisée dans la douille de sertissage 12. Lorsque l'extrémité du tuyau est suffisamment emmanché sur la canule 6 (figure 3), l'index 30 fait saillie par la lumière 34 hors de la douille de sertissage 12, tandis que lorsque l'extrémité du tuyau 2 n'est pas suffisamment emmanché sur la canule 6, l'index 30 ne dépasse pas de la douille de sertissage 12 (figure 4).

Les pattes élastiques 32 de l'indicateur 28 précontraignent l'indicateur dans la position représentée sur la figure 4, c'est-à-dire avec l'index 30 ne dépassant pas de la douille 12. Les pattes élastiques prennent appui sur la paroi intérieure de la douille de sertissage 12.

Dans la position de repos de l'indicateur 28 montré à la figure 4, l'évidement 36 de forme circulaire de l'indicateur 28 est excentré par rapport à la canule 6. Du côté de l'index 30 le bord de l'évidement vient au contact de la canule 6 tandis que du côté opposé à l'index 30 un espace entre la canule et le bord de l'évidement subsiste. Cet espace correspond à au moins deux fois l'épaisseur de la paroi du tuyau 2 à raccorder.

Le bord de l'évidement 36 de l'indicateur 28 présente un chanfrein 38 destiné à faciliter l'introduction de l'extrémité du tuyau 2 dans l'évidement 36.

Le fonctionnement de ce raccord est alors le suivant. La douille de sertissage 12 est fixée sur la pièce de raccordement 4. Les joints 14 sont en place sur la canule 6. L'indicateur 28 se trouve dans sa position de repos représentée sur la figure 4. L'index 30 est en position rétractée à l'intérieur de la douille 12. L'extrémité du tuyau 2 à raccorder est alors introduite entre la canule 6 et la douille de sertissage 12. Lorsque l'extrémité du tuyau à raccorder 2 a traversé toute la zone de sertissage 24 de la douille 12, elle pénètre dans la zone d'accrochage 22 de la douille 12. Elle rencontre alors l'indicateur 28. Comme indiqué ci-dessus, cet indicateur est au contact de la canule 6 et se trouve donc sur le chemin de l'extrémité du tuyau. En continuant à pousser le tuyau 2, l'extrémité du tuyau 2 vient prendre place dans l'évidement 36 de l'indicateur 28. Ceci est facilité par la présence du chanfrein 38. L'indicateur 28 est alors déplacé radialement vers le haut sur les figures du dessin et l'index 30 fait alors saillie à travers la lumière 34 de la douille de sertissage 12. Le mouvement de l'indicateur 28 se fait à l'encontre de la précontrainte élastique exercée par les pattes élastiques 32.

Ainsi, par la position de l'index 30, il est possible de savoir si l'extrémité du tuyau 2 à raccorder a traversé toute la zone de sertissage 24 de la douille 12. La présence de l'index 30 hors de la douille de sertissage 12 indique que l'extrémité du tuyau 2 recouvre au moins toute la zone de la canule se trouvant face à la zone de sertissage 24 de la douille 12. Ce recouvrement est suffisant pour réaliser un bon sertissage. L'index 30, lorsqu'il fait saillie hors de la lumière 34 de la douille de sertissage 12, garantit donc un bon positionnement du tuyau 2 dans le raccord à sertir.

La figure 2 représente le même raccord à sertir que celui représenté sur la figure 1 mais ici le tuyau à raccorder 2 en matériau multicouches avec âme en aluminium est remplacé par un tuyau en matière synthétique, par exemple en polyéthylène réticulé ou en polybutylène réticulé. Les différences qui apparaissent entre les figures 1 et 2 sont notamment l'absence de joint 14 sur la figure 2 ainsi que l'absence de l'anneau diélectrique 16 sur cette figure 2. En effet, comme il est connu de l'homme du métier, pour un tuyau en matière synthétique il est inutile de prévoir des joints d'étanchéité et étant donné que le tuyau ne comporte pas alors de matériau conducteur, la présence d'un anneau diélectrique 16 est tout-à-fait inutile.

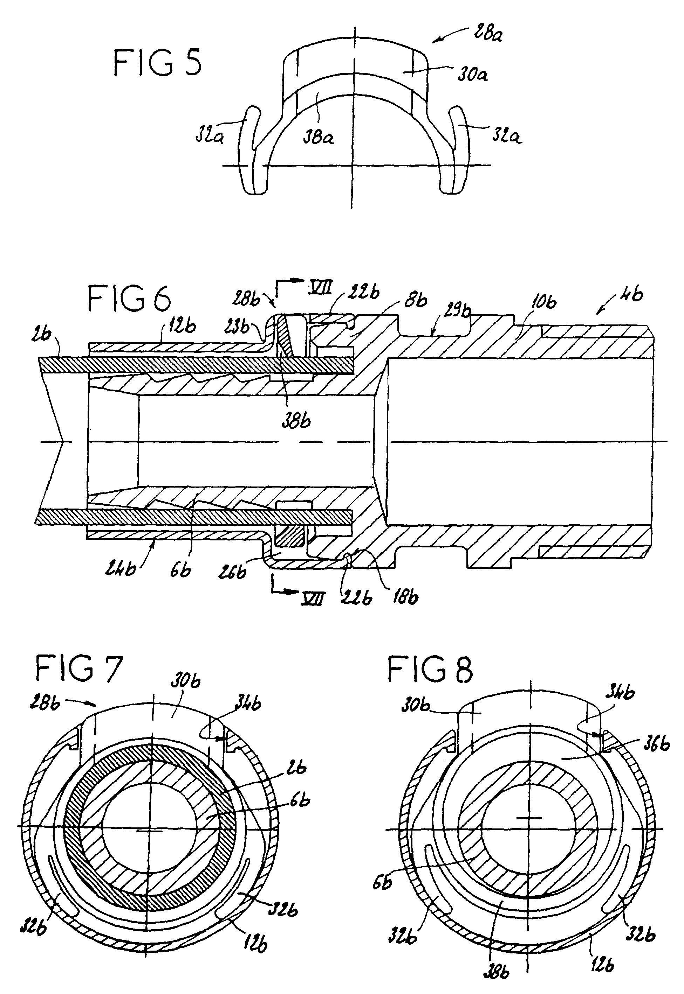

La figure 5 montre une variante de réalisation de l'indicateur 28 utilisé dans le raccord montré aux figures 1 à 4. Sur cette figure, les éléments correspondants aux éléments des figures 1 à 4 reprennent les mêmes références numériques mais suivies de la lettre a.

Ici, l'indicateur 28a présente également un index 30a et des pattes élastiques 32a mais au lieu de présenter la forme d'une bague circulaire il est conformé en demi-cercle s'étendant sur un peu plus de 180°. Le fonctionnement du raccord avec cet indicateur 28 est tout-à-fait identique à celui décrit ci-dessus.

Les figures 6 à 8 montrent une autre forme de réalisation d'un raccord selon l'invention. Dans la description faite en référence à ces figures, les références numériques utilisées précédemment sont reprises mais la lettre b est rajoutée.

Par rapport aux formes de réalisation précédentes, cette forme de réalisation présente un index 30b qui fait saillie hors de la lumière 34b de la douille 12b en position de repos de l'indicateur 28b, c'est-à-dire lorsqu'aucun tuyau n'est introduit dans la douille de sertissage 12b ou, bien entendu, lorsqu'un tuyau est insuffisamment emmanché sur la canule 6b. On retrouve dans cette forme de réalisation un indicateur 28b présentant un index 30b et des pattes élastiques 32b mais à la différence des formes de réalisation des figures précédentes, les pattes élastiques agissent sur la paroi intérieure de la douille de sertissage 12b pour précontraindre l'indicateur 28b dans la position dans laquelle l'index 30b se trouve à l'extérieur de la lumière 34b de la douille de sertissage 12b. On retrouve là un fonctionnement identique au fonctionnement décrit ci-dessus à cela près que lorsque l'extrémité du tuyau arrive au niveau de l'indicateur 28b, ce dernier se déplace radialement dans la direction opposée et l'index 30b passe de sa position sortie (figure 8) à sa position rentrée (figure 7).

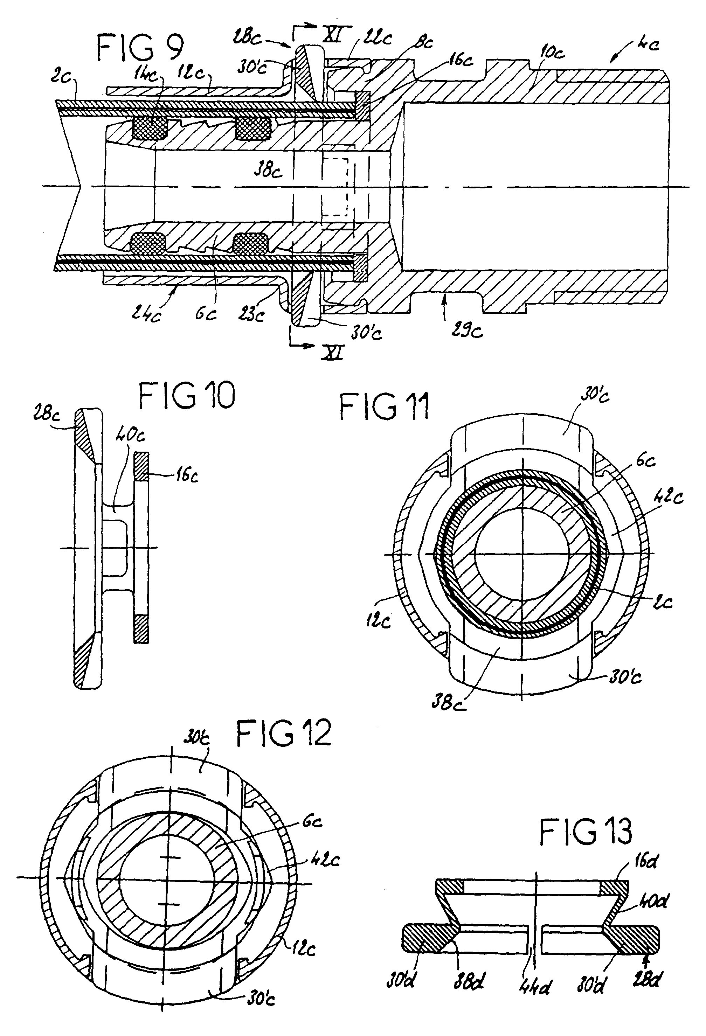

Les figures 9 à 12 montrent une quatrième variante d'un raccord à sertir selon l'invention. Dans la description faite en référence à ces figures, les éléments similaires aux éléments des figures précédentes portent la même référence numérique mais sont suivies de la lettre c.

Le raccord à sertir décrit ici est plus particulièrement destiné à un tuyau multicouches avec une âme en aluminium. En effet, dans cette variante, l'anneau 16c correspondant à l'anneau 16 de la figure 1 ne forme qu'une seule pièce venant de moulage avec l'indicateur 28c. Des pattes de liaison 40c relient l'indicateur 28c à l'anneau diélectrique 16c.

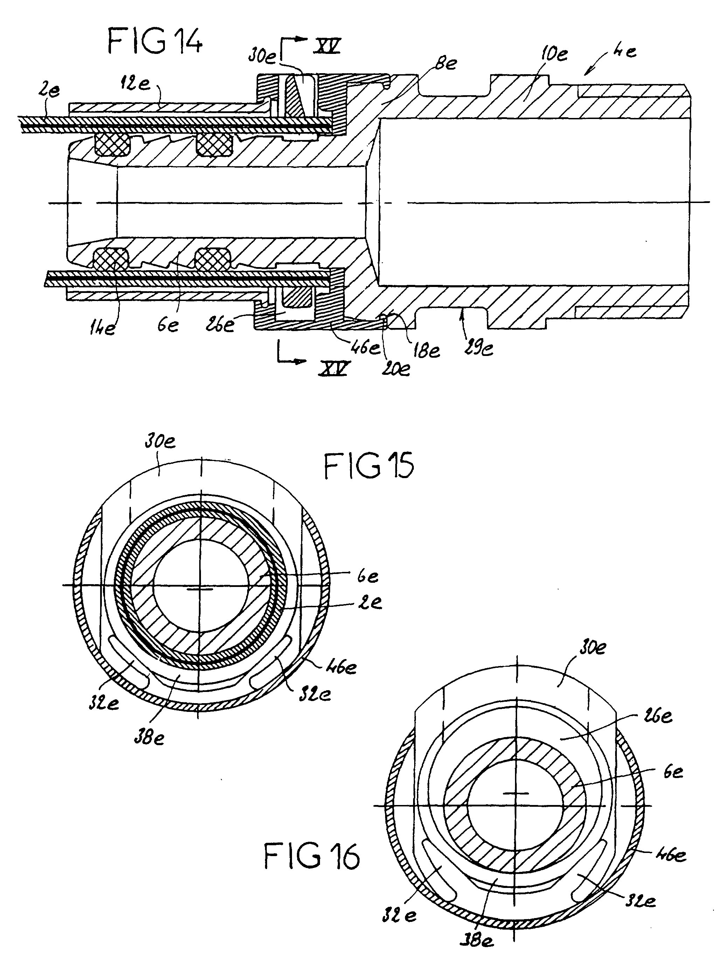

Dans cette forme de réalisation, l'indicateur 28c comporte deux index 30'c diamétralement opposés. Ces deux index sont reliés par deux branches 42c qui sont déformables élastiquement. Les deux branches 42c et les deux index 30'c forment une bague présentant un évidement 36c de forme sensiblement ovale. La figure 12 montre l'indicateur 28c au repos. On constate sur cette figure que la largeur de l'évidement 36c ovale correspond sensiblement au diamètre de la canule 6c. Cette largeur est mesurée entre les deux index 30'c. La longueur de l'ovale est sensiblement plus grande que le diamètre extérieur de la canule 6c. On retrouve sur le bord de l'évidement 36c un chanfrein 38c. Lorsque l'extrémité du tuyau 2c arrive au niveau de l'évidement 36c, elle vient pousser les index 30'c à travers les lumières 34c réalisées dans la douille de sertissage 12c et les branches 42c se déforment de manière à épouser la surface extérieure du tuyau 2c.

La figure 13 montre une variante de l'indicateur 28c. Dans la description en référence à cette figure 13, les références numériques utilisées pour la description des variantes précédentes sont reprises et la lettre d est rajoutée à ces références.

On retrouve dans cette variante une indicateur 28d relié par des pattes 40d à un anneau diélectrique 16d. Dans cette variante de réalisation, les moyens élastiques sont constitués par les pattes de liaison 40d. L'anneau 16d a une forme correspondant à l'extrémité frontale du tuyau à raccorder. L'indicateur 28d comporte deux index 30'd reliés par l'intermédiaire des pattes 40d à l'anneau 16d. Il n'y a pas de liaison directe entre les deux index 30'd. Sur la figure 13, on voit ainsi apparaître une fente 44d.

Le fonctionnement est alors le suivant. Lorsque l'extrémité du tuyau arrive au niveau de l'indicateur 28d, les index 30'd sont déplacés radialement vers l'extérieur grâce notamment à la présence du chanfrein 38d. Lors de ce déplacement des index 30'd, les pattes élastiques 40d se déforment. Elles passent de leur position inclinée par rapport à l'axe du raccord et représentées sur la figure 13 à une position quasi parallèle à l'axe du raccord.

Les figures 14 à 16 montrent une variante du raccord selon l'invention, variante que se rapproche de la variante représentée sur les figures 6 à 8. Dans la description de cette nouvelle variante, les mêmes références numériques que précédemment seront utilisées et la lettre e sera rajoutée à ces références numériques.

Dans cette forme de réalisation, l'indicateur 28e comporte un seul index 30e et cet index 30e rentre à l'intérieur de la douille de sertissage 12e lorsque le tuyau 2e est correctement en place sur la canule 6e. On retrouve là un indicateur 28e tout-à-fait comparable à l'indicateur 28b des figures 6 à 8. Les différences entre cette variante et la variante des figures 6 à 8 se situent notamment au niveau de la douille de sertissage 12e et de la fixation de cette dernière sur la pièce de raccordement 4e.

La liaison entre la pièce de raccordement 4e et la douille de sertissage 12e est assurée par une pièce intermédiaire 46e. On retrouve sur la pièce de raccordement 4e au niveau de la collerette 8e une rainure périphérique 18e dans laquelle vient s'encliqueter une nervure s'étendant radialement vers l'intérieur de la pièce 46e. Cette pièce 46e vient épouser la forme de la forme de la collerette 8e du côté de la canule 6e de telle sorte que lorsque le tuyau 2e est emmanché sur la canule 6e et poussé à fond en direction de la collerette 8e, la face frontale du tuyau 2e vienne en butée contre la pièce en matière synthétique 46e. Cette variante de réalisation est donc particulièrement avantageuse lorsque le tuyau 2e est un tuyau multicouches avec une âme en aluminium. En effet, la pièce 46e joue le rôle d'un anneau diélectrique.

Un espace 26e est également prévu dans la pièce 46e pour accueillir l'indicateur 28e. Une lumière 34e est bien entendu prévue pour permettre à l'index 30e de faire saillie hors de la pièce 46e.

La douille 12e présente dans ce cas de figure la forme d'un cylindre de section circulaire présentant à l'une de ses extrémités une nervure périphérique s'étendant radialement vers l'extérieur afin de coopérer avec une rainure annulaire réalisée dans la pièce 46e afin de permettre l'encliquetage de la douille de sertissage 12e sur la pièce intermédiaire 46e.

Le fonctionnement de ce accord est le même que celui représenté aux figures 6 à 8.

Tous les raccords décrits ci-dessus permettent de parfaitement bien visualiser le bon emmanchement d'un tuyau à raccorder sur une canule d'un raccord à sertir selon l'invention. L'indication de la bonne mise en place du tuyau peut se faire non seulement par la vue mais aussi par le toucher. Ainsi, dans les endroits mal éclairés, il est possible de déterminer à coup sûr si le raccordement du tuyau à raccorder sur la pièce de raccordement est ou non bien réalisé.

La présence d'un index rentrant ou sortant peut être très utile pour garantir la bonne qualité des raccordements effectués dans une machine réalisant de façon automatique des raccordements à l'aide d'un raccord à sertir. En effet, dans une telle machine de raccordement, il est facile de prévoir un capteur qui détecte la présence ou non de l'index indiquant le bon positionnement du tuyau à raccorder. Le capteur peut être alors un simple contacteur électrique. L'information fournie par le capteur est alors d'une grande fiabilité.

Comme il va de soi, l'invention ne se limite pas aux formes d'exécution décrites ci-dessus à titre d'exemples non limitatifs ; elle en embrasse au contraire toutes les variantes de réalisation entrant dans le cadre défini par les revendications ci-après.

Ainsi, il est possible bien entendu de prévoir de nombreuses autres formes pour l'indicateur selon l'invention. La figure 5 par exemple montre une variante de la forme de réalisation des figures 1 à 4, variante dans laquelle cet indicateur n'est pas une bague. D'autres variantes sont bien entendu envisageables pour la forme de réalisation des figures 1 à 4 mais aussi pour les autres formes de réalisation.

Dans les exemples décrits, la douille de sertissage est reliée fixement à la pièce de raccordement. On pourrait bien entendu avoir une douille de sertissage qui ne soit pas reliée à cette pièce de raccordement.

Dans les exemples ci-dessus, le nombre des index a été limité à deux. Ces index, comme le montrent les figures, s'étendent sur une plage angulaire relativement grande. Selon les contraintes imposées, on peut envisager d'avoir plusieurs index (trois, quatre voire plus) qui s'étendent sur des plages angulaires plus restreintes.

Les moyens élastiques utilisés sont intégrés à l'indicateur dans toutes les variantes proposées. Toutefois, un ressort ou similaire distinct de l'indicateur pourrait être placé entre l'indicateur et la douille de sertissage pour exercer une contrainte sur l'indicateur pour faire entrer ou sortir le ou les index de la ou des lumière(s) correspondante(s). Cette forme de réalisation n'a pas été représentée au dessin car elle présente l'inconvénient de nécessiter une pièce de plus et de prévoir dans les autres pièces des moyens permettant le bon positionnement des ressorts par rapport à l'indicateur. Ceci est techniquement réalisable mais est difficilement économiquement exploitable.

La forme de la canule, la présence ou non de joints d'étanchéité, peuvent être modifiées sans sortir du cadre de l'invention. En effet, l'homme du métier connaît diverses formes de canules et il est par exemple connu de monter des tuyaux multicouches avec une âme en aluminium sur une canule sans prévoir de joint d'étanchéité.

## Revendications

1. Raccord à sertir pour un tuyau (2) en matière synthétique comportant une pièce de raccordement (4) rigide présentant une zone de raccordement (6) sensiblement cylindrique, et une douille de sertissage (12) destinée à être déformée au niveau de la zone de raccordement (6) en fixant l'extrémité du tuyau sur la pièce de raccordement (4),
**caractérisé en ce qu'**il comporte en outre un indicateur (28) munie d'au moins un index (30), placé essentiellement dans la douille de sertissage (12) au niveau de la zone de raccordement (6), et déplaçable radialement entre une position de repos dans laquelle l'indicateur (28) est précontraint par des moyens élastiques (32;40d;42c) et une position active dans laquelle l'indicateur (28) est maintenu par action du tuyau (2) à raccorder à l'encontre des moyens élastiques,
une lumière (34) réalisée dans la douille de sertissage (12) étant prévue pour le passage de chaque index (30) lorsque l'indicateur (28) passe de sa position de repos à sa position active ou inversement.

2. Raccord selon la revendication 1, **caractérisé en ce que** l'indicateur (28) est une bague présentant à sa périphérie l'index (30) s'étendant radialement, l'évidement (36) intérieur de la bague étant excentré par rapport à la zone de raccordement (6) dans la position de repos de l'indicateur (28).

3. Raccord selon la revendication 1, **caractérisé en ce que** l'indicateur (28a) se présente sous la forme d'un arc de cercle muni de l'index (30a) s'étendant radialement, l'arc de cercle étant excentré par rapport à la zone de raccordement (6).

4. Raccord selon l'une des revendications 1 à 3, **caractérisé en ce que** les moyens élastiques (32;40d;42c) sont intégrés à l'indicateur.

5. Raccord selon la revendication 4, **caractérisé en ce que** les moyens élastiques sont des pattes élastiques (32) destinées à prendre appui sur la paroi interne de la douille de sertissage (12).

6. Raccord selon l'une des revendications 1 à 5, **caractérisé en ce que** les moyens élastiques agissent sur l'indicateur (28) de manière à ce que l'index (30) soit en position rétractée à l'intérieur de la douille (12) dans la position de repos de l'indicateur (28).

7. Raccord selon l'une des revendications 1 à 5, **caractérisé en ce que** les moyens élastiques (32;40d;42c) agissent sur l'indicateur (28) de manière à ce que l'index (30) fasse saillie hors de la lumière (36) réalisée dans la douille de sertissage (12) dans la position de repos de l'indicateur.

8. Raccord selon l'une des revendications 1 à 7, **caractérisé en ce que** la pièce de raccordement (4) comporte une collerette (8) destinée à servir de butée pour l'extrémité du tuyau (2) lorsque ce dernier est bien emmanché sur la zone de raccordement (6) et **en ce que** la douille de sertissage (12) est reliée à la collerette (8).

9. Raccord selon l'une des revendications 1 à 8, **caractérisé en ce que** la pièce de raccordement (4) comporte une gorge annulaire (29).

10. Raccord selon la revendication 8, **caractérisé en ce que** la douille de sertissage (12) est encliquetée sur la collerette (8).

11. Raccord selon la revendication 8, **caractérisé en ce que** la douille de sertissage (12e) est encliquetée sur une pièce (46e) en matière synthétique, elle-même fixée, par exemple par encliquetage, sur la collerette (8e).

12. Raccord selon la revendication 11, **caractérisé en ce que** la pièce intermédiaire (46e) en matière synthétique se prolonge au niveau d'un épaulement formé par la zone de raccordement (6e) et la collerette (8e) et sert ainsi de butée à l'extrémité du tuyau (2e).

13. Raccord selon l'une des revendications 1 à 12, **caractérisé en ce que** la douille de sertissage (12) comporte un épaulement (23) extérieur.

14. Raccord selon l'une des revendications 1 à 13, **caractérisé en ce que** l'indicateur (28c,d) comporte deux index (30'c,d)) et **en ce que** la douille de sertissage (12c,d) est munie de deux lumières (34c,d) correspondantes.

15. Raccord selon la revendication 14, **caractérisé en ce que** les deux index (30'c,d) sont diamétralement opposés par rapport à la zone de raccordement (6) et sont reliés par des branches (42c,d) de manière à former un évidement ovale déformable élastiquement, la largeur de l'ovale étant inférieure au diamètre extérieur du tuyau (2) à raccorder tandis que la longueur de l'ovale est supérieure au diamètre extérieur du tuyau (2) à raccorder.

16. Raccord selon l'une des revendications 1 à 14, **caractérisé en ce que** l'indicateur (28c,d) est accouplé à une bague (16c,d) réalisée en matériau diélectrique dont le profil correspond sensiblement à la section du tuyau (2) à raccorder.

17. Outil de sertissage destiné au sertissage d'un raccord à sertir selon l'une des revendications précédentes, comportant des mâchoires de sertissage, **caractérisé en ce que** des moyens permettant de détecter la présence ou l'absence de l'index (30) au nombre d'au moins un sont prévus.

18. Outil de sertissage selon la revendication 17, **caractérisé en ce que** les moyens de détection comportent un contacteur électrique.

## Patentansprüche

1. Quetschverbindung für ein Rohr (2) aus Kunststoffmaterial, umfassend ein starres Verbindungselement (4), das einen im Wesentlichen zylindrischen Verbindungsbereich (6) aufweist, sowie eine Quetschhülse (12), die dazu ausgelegt ist, im Bereich des Verbindungsbereichs (6) verformt zu werden, wobei sie das Ende des Rohrs auf dem Verbindungselement (4) befestigt,
**dadurch gekennzeichnet, dass** sie ferner eine mit wenigstens einem Zeiger (30) versehene Anzeige (28) umfasst, die im Wesentlichen in der Quetschhülse (12) im Bereich des Verbindungsbereichs (6) angeordnet und radial zwischen einer Ruheposition, in der die Anzeige (28) durch elastische Mittel (32;40d;42c) vorgespannt ist, sowie einer aktiven Position verlagerbar ist, in der die Anzeige (28) durch die Wirkung des zu verbindenden Rohrs (2) gegen die elastischen Mittel gehalten wird,
wobei eine in der Quetschhülse (12) gefertigte Öffnung (34) für das Durchlassen jedes Zeigers (30) vorgesehen ist, wenn die Anzeige (28) von ihrer Ruheposition in ihre aktive Position oder umgekehrt übergeht.

2. Verbindung nach Anspruch 1, **dadurch gekennzeichnet, dass** die Anzeige (28) ein Ring ist, der an seinem Umfang den sich radial erstreckenden Zeiger (30) aufweist, wobei die Aussparung (36) innerhalb des Rings in der Ruheposition der Anzeige (28) exzentrisch bezüglich des Verbindungsbereichs (6) angeordnet ist.

3. Verbindung nach Anspruch 1, **dadurch gekennzeichnet, dass** die Anzeige (28a) die Gestalt eines Kreisbogens aufweist, der mit dem sich radial erstreckenden Zeiger (30a) versehen ist, wobei der Kreisbogen bezüglich des Verbindungsbereichs (6) exzentrisch angeordnet ist.

4. Verbindung nach einem der Ansprüche 1 bis 3, **dadurch gekennzeichnet, dass** die elastischen Mittel (32;40d;42c) in die Anzeige integriert sind.

5. Verbindung nach Anspruch 4, **dadurch gekennzeichnet, dass** die elastischen Mittel elastische Klauen (32) sind, die dazu ausgelegt sind, an der Innenwand der Quetschhülse (12) anzuliegen.

6. Verbindung nach einem der Ansprüche 1 bis 5, **dadurch gekennzeichnet, dass** die elastischen Mittel derart auf die Anzeige (28) drücken, dass sich in der Ruheposition der Anzeige (28) der Zeiger (30) in einer in das Innere der Hülse (12) zurückgezogenen Position befindet.

7. Verbindung nach einem der Ansprüche 1 bis 5, **dadurch gekennzeichnet, dass** die elastischen Mittel (32;40d;42c) derart auf die Anzeige (28) drücken, dass in der Ruheposition der Anzeige der Zeiger (30) aus der in der Quetschhülse (12) gefertigten Öffnung (36) vorsteht.

8. Verbindung nach einem der Ansprüche 1 bis 7, **dadurch gekennzeichnet, dass** das Verbindungselement (4) einen Kragen (8) umfasst, der dazu ausgelegt ist, als Anschlag für das Ende des Rohrs (2) zu dienen, wenn dieses letztgenannte gut auf den Verbindungsbereich (6) aufgedrückt ist, und dass die Quetschhülse (12) mit dem Kragen (8) verbunden ist.

9. Verbindung nach einem der Ansprüche 1 bis 8, **dadurch gekennzeichnet, dass** das Verbindungselement (4) eine Ringrille (29) umfasst.

10. Verbindung nach Anspruch 8, **dadurch gekennzeichnet, dass** die Quetschhülse (12) auf dem Kragen (8) eingerastet ist.

11. Verbindung nach Anspruch 8, **dadurch gekennzeichnet, dass** die Quetschhülse (12e) auf einem Element (46e) aus Kunststoffmaterial eingerastet ist, welches selbst wiederum beispielsweise durch Einrasten auf dem Kragen (8e) befestigt ist.

12. Verbindung nach Anspruch 11, **dadurch gekennzeichnet, dass** sich das Zwischenelement (46e) aus Kunststoffmaterial in den Bereich einer Schulter verlängert, die durch den Verbindungsbereich (6e) und den Kragen (8e) gebildet ist und somit als Anschlag für das Ende des Rohrs (2e) dient.

13. Verbindung nach einem der Ansprüche 1 bis 12, **dadurch gekennzeichnet, dass** die Quetschhülse (12) eine Außenschulter (23) umfasst.

14. Verbindung nach einem der Ansprüche 1 bis 13, **dadurch gekennzeichnet, dass** die Anzeige (28c,d) zwei Zeiger (30'c,d) umfasst, und dass die Quetschhülse (12c,d) mit zwei entsprechenden Öffnungen (34c,d) ausgestattet ist.

15. Verbindung nach Anspruch 14, **dadurch gekennzeichnet, dass** die zwei Zeiger (30'c,d) bezüglich des Verbindungsbereichs (6) diametral entgegengesetzt und durch Zweige (42c,d) derart verbunden sind, dass sie eine elastisch verformbare ovale Aussparung bilden, wobei die Breite des Ovals kleiner als der Außendurchmesser des zu verbindenden Rohrs (2) ist, wohingegen die Länge des Ovals größer als der Außendurchmesser des zu verbindenden Rohrs (2) ist.

16. Verbindung nach einem der Ansprüche 1 bis 14, **dadurch gekennzeichnet, dass** die Anzeige (28c,d) mit einem aus dielektrischem Material hergestellten Ring (16c,d) gekoppelt ist, dessen Profil im Wesentlichen dem Querschnitt des zu verbindenden Rohrs (2) entspricht.

17. Quetschwerkzeug zum Quetschen einer Quetschverbindung nach einem der vorhergehenden Ansprüche, umfassend Quetschbacken, **dadurch gekennzeichnet, dass** Mittel vorgesehen sind, die es ermöglichen, das Vorhandensein oder Fehlen des wenigstens einen Zeigers (30) zu erfassen.

18. Quetschwerkzeug nach Anspruch 17, **dadurch gekennzeichnet, dass** die Erfassungsmittel einen elektrischen Schalter umfassen.

## Claims

1. Compression fitting for a pipe (2) made of synthetic material comprising a rigid connecting piece (4) having a roughly cylindrical connecting region (6), and a compression sleeve (12) intended to be deformed at the connecting region (6), thereby fixing the end of the pipe to the connecting piece (4),
**characterized in that** it further comprises an indicator (28) equipped with at least one index (30), placed essentially in the compression sleeve (12) at the connecting region (6), and able to be moved radially between a rest position in which the indicator (28) is prestressed by elastic means (32; 40d; 42c) and an active position in which the indicator (28) is held by action of the pipe (2) to be connected against the action of the elastic means,
an aperture (34) made in the compression sleeve (12) being provided for the passage of each index (30) when the indicator (28) passes from its rest position to its active position or vice versa.

2. Fitting according to Claim 1, **characterized in that** the indicator (28) is a ring which, at its periphery, has the index (30) extending radially, the interior recess (36) of the ring being eccentric with respect to the connecting region (6) when the indicator (28) is in the rest position.

3. Fitting according to Claim 1, **characterized in that** the indicator (28a) is in the form of an arc of a circle equipped with the index (30a) extending radially, the arc of the circle being eccentric with respect to the connecting region (6).

4. Fitting according to one of Claims 1 to 3, **characterized in that** the elastic means (32; 40d; 42c) are incorporated into the indicator.

5. Fitting according to Claim 4, **characterized in that** the elastic means are elastic tabs (32) intended to bear against the interior wall of the compression sleeve (12).

6. Fitting according to one of Claims 1 to 5, **characterized in that** the elastic means act on the indicator (28) in such a way that the index (30) is in the retracted position inside the sleeve (12) when the indicator (28) is in the rest position.

7. Fitting according to one of Claims 1 to 5, **characterized in that** the elastic means (32; 40d; 42c) act on the indicator (28) in such a way that the index (30) projects from the aperture (36) made in the compression sleeve (12) when the indicator is in the rest position.

8. Fitting according to one of Claims 1 to 7, **characterized in that** the connecting piece (4) comprises a collar (8) intended to act as an end stop for the end of the pipe (2) when the latter is pushed fully into the connecting region (6), and **in that** the compression sleeve (12) is connected to the collar (8).

9. Fitting according to one of Claims 1 to 8, **characterized in that** the connecting piece (4) has an annular groove (29).

10. Fitting according to Claim 8, **characterized in that** the compression sleeve (12) is clipped over the collar (8).

11. Fitting according to Claim 8, **characterized in that** the compression sleeve (12e) is clipped over a piece (46e) made of synthetic material, itself fixed, for example by clipping, to the collar (8e).

12. Fitting according to Claim 11, **characterized in that** the intermediate piece (46e) made of synthetic material is extended at a shoulder formed by the connecting region (6e) and the collar (8e) and thus acts as an end stop for the end of the pipe (2e).

13. Fitting according to one of Claims 1 to 12, **characterized in that** the compression sleeve (12) has an external shoulder (23).

14. Fitting according to one of Claims 1 to 13, **characterized in that** the indicator (28c,d) has two indexes (30'c,d) and **in that** the compression sleeve (12c,d) has two corresponding apertures (34c,d).

15. Fitting according to Claim 14, **characterized in that** the two indexes (30'c,d) are diametrically opposed with respect to the connecting region (6) and are connected by branches (42c,d) so as to form an elastically deformable oval recess, the width of the oval being smaller than the outside diameter of the pipe (2) that is to be connected while the length of the oval is greater than the outside diameter of the pipe (2) that is to be connected.

16. Fitting according to one of Claims 1 to 14, **characterized in that** the indicator (28c,d) is coupled to a ring (16c,d) made of dielectric material, the profile of which more or less corresponds to the cross section of the pipe (2) that is to be connected.

17. Crimping tool intended to crimp a compression fitting according to one of the preceding claims, comprising crimping jaws, **characterized in that** means detecting the presence or absence of the index (30) numbering at least one are provided.

18. Crimping tool according to Claim 17, **characterized in that** the detection means comprise an electric contact.
